# EUROPEAN PATENT SPECIFICATION

(11) **EP 1 825 760 B1**
(45) Date of publication and mention of the grant of the patent: **11.04.2012**
(21) Application number: 06003684.5
(22) Date of filing: 23.02.2006
(51) Int. Cl.: A23G 1/00, A23G 1/20, A23G 3/00, A23G 3/20

(54) **Process for production of filled one-shot confectionery products**
Einstufiges Verfahren zur Herstellung von gefüllten Süsswaren
Procédé en une seule phase pour la préparation de confiserie fourrée

(43) Date of publication of application: 29.08.2007
(60) Divisional application: 10183469.5
(73) Proprietor: Kraft Foods R & D, Inc. Zweigniederlassung München, 81737 München (DE)
(72) Inventor: Schmidt, Ralph T., 20357 Hamburg (DE); Jung, Christian W., 81545 Munich (DE)
(74) Representative: HOFFMANN EITLE

(56) References cited:
- EP-A- 0 931 462
- DE-A1- 19 735 889
- DE-U1-202005 002 309
- US-A- 5 180 602
- US-A- 5 415 534

## Description

### Field of Invention

This invention relates generally to a process for filling a shell with a filling, and more particularly to a process for preparing a filled confectionery product where an edible shell is filled with a filling and an edible cover at substantially the same time.

### Background

Various methods of manufacture are known for creating filled products, such as chocolate confectionery. Chocolate filled confections typically consist of at least two different types of chocolate or at least a chocolate material and a food component as the filling. One of the known methods is to manufacture each part of the filled chocolate in a separate step. The shell of the chocolate exterior is made first. After cooling, the hollow chocolate shell is filled with the desired filling. The last step is depositing a chocolate cover over the filled chocolate shell. Manufacturing filled chocolate in this manner entails multiple process steps, see for instance US 5,180,602.

Production of chocolate confectionery can also occur simultaneously via the so-called "one-shot" process, where the outer chocolate shell and the inner filling are deposited at the same time, thereby combining the multiple process steps into one. Currently, the one-shot process utilizes a one-shot depositor having two concentric nozzles, an inner and an outer nozzle. The outer nozzle is connected to the chocolate supply and the inner nozzle is connected to the filling supply. During the production of the filled product, the depositor discharges the chocolate shell material and the filling material, one after the other in rapid succession (i.e., essentially simultaneously), into empty cavities of a mold. The one-shot process normally begins by depositing the chocolate material and the filling material inside the chocolate material, so that the chocolate material forms the outer shell with the filling material dispersed therein. The one-shot method greatly simplifies the manufacture of the filled chocolate products. Thus, the chocolate shell, its filling, and the chocolate cover are all deposited in the same step, or in "one-shot.", see for instance in EP 931 462 or DE 19 735 889.

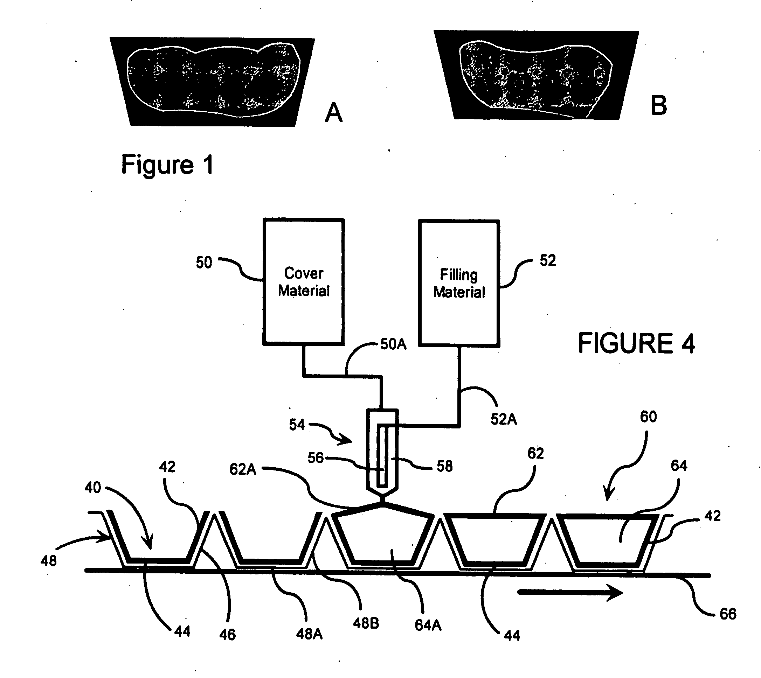

Unfortunately, there are many process limitations associated with the one-shot process. One major limitation is that the physical properties (e.g., temperature, density, and viscosity) of the chocolate and filling material must be closely matched to obtain high-quality products. For example, if the production of filled products, like chocolates, involves an outer shell material of a lower density than the filling material then the filling material will tend to sink down into and/or through the chocolate shell. This sinking action tends to result, at best, in undesired variations in the thickness of the shell (as shown in FIGURE 1A) or, at worst, in the filling material completely penetrating the shell and, thus, leaking out, as shown in FIGURE 1B. Furthermore, the temperature of the filling must be the same or lower than that of the chocolate shell so that it does not damage the tempering of, or melt, the chocolate shell.

There is a continuing need for a method of manufacturing filled chocolate products which is efficient (i.e., quick, with few process steps) and is not limited by the need to closely match physical parameters (i.e., temperature, viscosity, and density) of the chocolate and filling. More flexibility is desired, such that many types of filling material may be used in the chocolate shell while still providing process efficiency.

### SUMMARY

This invention is set forth in the appended claims and it provides a process for manufacturing filled products by filling a pre-made outer shell material with a filling and cover material at substantially the same time. In this process, a one-shot depositor discharges both the filling material and a separate cover material substantially simultaneously into an already made shell material. The shell material is made prior to using the one-shot process and the deposition of the filling material. Since the filling material is deposited into the pre-made shell, the filling cannot penetrate significantly into the pre-formed shell material. This allows the use of many types of fillings, since differences in densities, viscosities, and/or temperatures are no longer critical. As a result, deposition of the filling in the present modified process does not cause defects to the completed product due to differences in these physical parameters between the shell and filling. Preferably the outer shell material and cover material are formed of chocolate.

The edible filling used in the modified one-shot process of this invention may comprise water-based fillings and fat-based fillings. The pre-made outer shell may comprise chocolate, candy, caramel, toffee, or other suitable shell substance. The outer shell is produced by any known method of manufacture used in the art, such as molding, stamping, pressing, and the like.

### Brief Description of the Drawings

FIGURES 1A and 1B illustrate possible defects in conventional chocolate-filled products prepared by the conventional one-shot process.

FIGURE 2 is a general flow chart illustrating the present invention.

FIGURE 3 is a more detailed flow chart illustrating the present invention.

FIGURE 4 is a schematic (not to scale) of the inventive process.

### Detailed Description

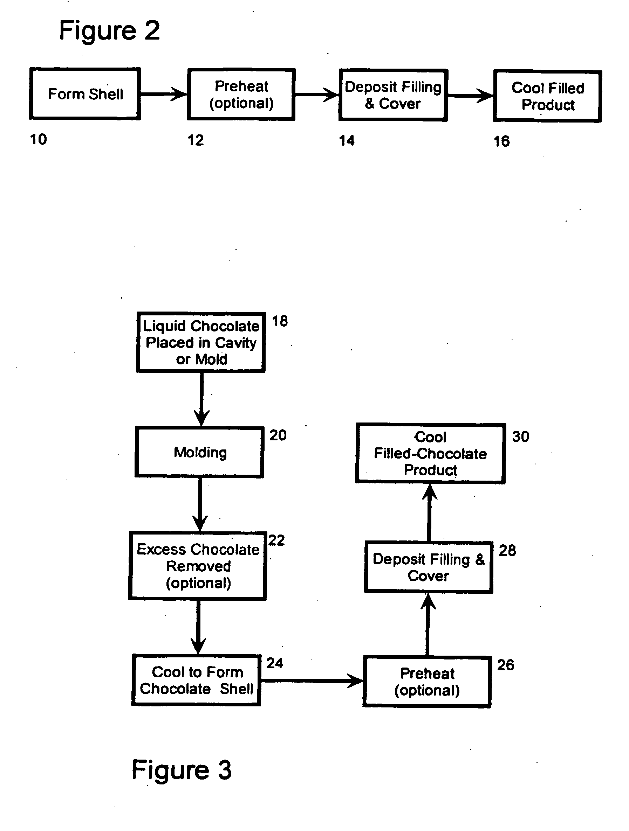

Methods and apparatus are disclosed herein and illustrated in FIGURES 2-4 for forming filled confectionery products, and in particular filled chocolate products, by using the modified one-shot process of the present invention to fill the edible shell (e.g., chocolate shell). The chocolate shell is made first in a separate step and is then filled in a second, subsequent step. During the filling step, the one-shot depositor adds both the filling and the covering material, in particular, the filling and the chocolate material into the chocolate shell in a single step. The covering material effectively completes or closes the edible shell, thereby completely containing the filling material in the outer shell (i.e., the pre-made shell and the covering material). Although this invention relates mainly to edible products made using the modified one-shot process, non-edible products may also be made utilizing this process as well.

A flow chart in FIGURE 2 describes the general modified one-shot process of this invention for filling an edible shell. As shown in FIGURE 2, the outer shell is formed in step 10 and optionally preheated in step 12. The filling and covering material are deposited essentially simultaneously in step 14. The so-formed filled product is then cooled in step 16. Optional preheating in step 12 allows the sides of the outer shell to be slightly softened so as to better "knit" with the cover material. The exterior chocolate shell material can be manufactured using typical chocolate manufacturing techniques such as, for example, molding, stamping, pressing, and the like. Besides a chocolate material for the shell, the shell material may also be made of candy, caramel, toffee, or other suitable shell materials that are edible and would be utilized in confectionery products.

A more detailed flow chart is shown in FIGURE 3 using molding techniques to prepare the pre-made chocolate shell. A liquid chocolate shell material is poured or placed into a cavity in the mold in order to take on the shape of the cavity, as shown at step 18. The cavities in which the outer shell is prepared may be in any of a number of different shapes such as rectangles, squares, oblongs, circles, stars, seashells, and other typical chocolate molding shapes currently in use in the art. Additionally, the cavities may contain designs or emblems at the bottom of the mold so that they are imprinted into the final filled chocolate. Generally, once demolded or removed from the cavity, the bottom of the edible shell forms the top of the final filled-chocolate product and the covering material forms the bottom of the final filled-chocolate product.

Once the chocolate shell material is poured into the cavity, conventional molding techniques can be used to form the outer shell. For example, a conventional press or stamping machine can be used in which a rod or other member protrudes down therefrom and extends towards the mold tray placed beneath it, as in step 20 of FIGURE 3, to form the outer shell. Preferably a relatively even thickness of chocolate is spread about all edges of the inner cavity within the mold. The ends of the rods are shaped so that the rod fits therein to form, with the cavity, the outer shell and is pressed down into the chocolate displacing the chocolate shell material such that it is forced to spread out (preferably evenly) over the edges of the inner cavity of the mold, thereby creating a hollow center in the chocolate material into which the filling material is later deposited (along with the covering material). The preferably cold rods are pressed down into the chocolate within the cavity to form the outer shell. Other conventional molding equipment may also be used. The edible shells can be prepared just prior to deposition of the filling and covering material. Of course, the edible shells could be prepared at an earlier time and then placed within the appropriate cavities once it is desired to complete the filled-chocolate products.

After the chocolate material has been adequately spread out over the edges within the inner cavity of the mold during the molding process, some of the chocolate (i.e., the vertical ends protruding up out of the mold) may have spread out and up over the top edges of the cavities. This excess chocolate material can, if desired, be removed from around the open end of the cavity in a manner so there is no contamination or contact with adjacent chocolate shells. Preferably, the edges of the chocolate are trimmed so that they do not extend beyond the terminal edges of the cavity (step 22 of FIGURE 3). The chocolate shells are then cooled in step 24 (typically to about 15 to about 20°C) to ensure that the shell exterior has properly hardened. Just before the chocolate shells are to be filled, however, they can be optionally preheated (typically to a temperature of about 27 to about 30°C and preferably about 27°C) at step 26. Preferably only the upper chocolate edges of the shell are so heated. This optional preheating step allows the upper chocolate edges of the shell to slightly soften, such that when the shell is filled and topped off with the chocolate covering, the softened preheated edges of the shell will act to seal, or "knit" with, the chocolate cover material, thereby creating an effective closure or seal which does not allow leakage of the filling.

Once the chocolate shell is formed (and preheating if that optional step is used), it is ready to be filled with the desired filling and topped with the chocolate covering using the one-shot depositor, step 28. Any type of filling that is compatible with the one-shot machine may be used. As noted above, there is no need to match up densities, viscosities, or temperatures of the filling material with that of the chocolate shell material since the shell has already been made and is hardened, and it is therefore not significantly affected by the physical parameters of the filling used. Of course, the temperature of the filling material should not be so high as to cause significant melting of the chocolate shell. Typical filling materials that may be used are water-based fillings and fat-based fillings (e.g., sugar fillings, chocolate fillings, caramel fillings, and the like). The edible covering material may be chosen to match that of the edible shell material used; but, if desired, the cover may be a material different from the edible shell material.

A schematic of one embodiment of the modified one-shot process is shown in FIGURE 4. The individual mold openings or cavities 48 are typically contained in a tray or mold 46 to, at least initially, hold the pre-made shells 40; the individual cavities 48 may be of similar or different shapes, sizes, depths, and the like. The cavity 48 comprise a hollow cavity with an opening at the upper end and an inner cavity formed by a bottom 48A and edges 48B; the edges 48B extend upwards from the bottom 48A and terminate at the upper end of the individual cavities or tray; the top portion is defined by an open end. The pre-made shells 40, having a bottom 44 and edges 42, fit within the cavities 48. The mold 46 rests upon a conveyor belt 66 (advancing along the direction of the arrow) or other means which allows the individual pre-made shells 40 to advance so that the filling material 52 and cover material 50 may be deposited therein. The one-shot depositor comprises a manifold (not shown) to which at least one nozzle assembly 54 is connected. Preferably, a plurality of nozzle assemblies 54 is used to prepare a plurality of filled confectionary products 60 at the same time. The nozzle assembly comprises a nozzle arrangement having at least two concentric nozzles: an inner nozzle 56 and an outer nozzle 58. The inner nozzle 56 is used to dispense the filling material 52 (which is obtained via line 52A). The outer nozzle 58 is used to dispense the cover material 50 (which is obtained via line 50A). The nozzle assembly 54 dispenses the filling material 52 and the cover material 50 substantially simultaneously into the pre-made shell 40. "Substantially simultaneously" means that both the filling material 52 and the covering material 50 are dispensed through the same nozzle assembly 54; filling material 52 is dispensed first through the inner nozzle 58 followed almost immediately by the cover material 50 through the outer nozzle 56, such that it allows the filling material 64A to fill up the cavity within the pre-made shell 40 first, followed by the immediate dispensing of the cover material 62A which is laid across the top of the filling material and forms a seal with the edges 42 of the (optionally preheated) pre-made shell 40. The filling 64 or 64A is encased in the edible shell (consisting of pre-made shell 40 and the covering material 62 or 62A) as it is deposited in the cavity. The edible covering material 50 forms a covering 62 or 62A on the open end of the edible pre-made shell 40 encasing the filling 64 or 64A inside, which forms the filled chocolate product 60. After the filling and cover have been deposited, the filled chocolate product is then allowed to cool (typically to less than about 20°C) and is ready for packaging. If desired, more than two concentric nozzles may be used to prepare, for example, confectionery products with more than one type of filling.

## Claims

1. A method for producing a filled product, the steps comprising:
providing a premade shell having a cavity and an opening on one end, wherein the shell is formed from a first material; and applying a filling and a covering material from a nozzle arrangement having concentric inner and outer nozzles, such that the covering material flows through the outer nozzle and the filling flows through the inner nozzle into the cavity, wherein the filling is dispensed first through the inner nozzle followed almost immediately by the covering material through the outer nozzle, such that the filling is allowed to fill up the cavity within the premade shell first, followed by the immediate dispensing of the covering material which is laid across the top of the filling and forms a seal with edges of the premade shell, whereby the filling is encased in the shell and the covering material applied via the outer nozzle forms a covering on the open end of the shell to form the filled product.

2. The method according to claim 1 further comprising providing a premade edible shell having a cavity and an opening on one end, wherein the edible shell is formed from an edible material, wherein the edible material is selected from the group consisting of chocolate, candy, caramel and toffee; and applying an edible filling and an edible covering material from a nozzle arrangement having concentric inner and outer nozzles, wherein the edible covering material is also formed from the edible material, such that the edible covering material flows through the outer nozzle and the edible filling flows through the inner nozzle into the cavity, whereby the edible filling is encased in the edible shell and the edible covering material applied via the outer nozzle forms a covering on the open end of the edible shell to form the filled confectionery product.

3. The method according to claim 2 further comprising preheating the edible shell to a temperature to soften the edible material prior to applying the edible filling and edible covering material.

4. The method according to claim 2 or 3, wherein the edible filling is selected from the group consisting of water-based fillings and fat-based fillings.

5. The method according to one of claims 2 to 4, wherein the edible shell and the edible covering material are independently selected from the group consisting of chocolate, candy, caramel, and toffee.

6. The method according to one of claims 2 to 5, wherein the edible shell is formed by molding, stamping or pressing.

7. The method according to one of claims 2 to 6, wherein the filled confectionery product is cooled to a temperature below about 20°C.

8. The method according to one of claims 2 to 7, wherein the edible shell is formed by molding, stamping or pressing and the edible shell is treated before filling to remove any excess material around the open end.

9. The method according to claim 3, wherein the edible shell and the edible covering material are chocolate and the edible shell is preheated to about 25 to about 30°C.

10. The method according to claim 2 further comprising
providing a premade chocolate shell having a cavity and an opening on one end, wherein the chocolate shell is formed from a chocolate material; and applying a filling and a chocolate covering material from a nozzle arrangement having concentric inner and outer nozzles such that the chocolate covering material flows through the outer nozzle and the filling flows through the inner nozzle into the cavity, whereby the filling is substantially encased in the chocolate shell and the chocolate covering material applied via the outer nozzle forms a covering on the open end of the chocolate shell to form the chocolate filled confectionery product.

11. The method according to claim 10 further comprising preheating the chocolate shell to a temperature to soften the chocolate material prior to applying the filling and chocolate covering material.

12. The method according to claim 10 or 11, wherein the filling is selected from the group consisting of water-based fillings and fat-based fillings.

13. The method according to one of claims 10 to 12, wherein the chocolate shell is formed by molding, followed by pressing the chocolate material into a mold cavity using a member to adequately disperse the chocolate material over inner edges of the mold cavity while creating a chocolate cavity, and then cooling the chocolate material within the mold, to obtain the chocolate shell.

14. The method according to one of claims 10 to 13, wherein the chocolate shell is formed by molding, stamping or pressing.

15. The method according to one of claims 10 to 14, wherein the chocolate shell is formed by molding, stamping or pressing and the chocolate shell is treated before filling to remove any excess material around the open end.

16. The method according to claim 11, wherein the temperature to which the chocolate shell is preheated to is about 25 to about 30°C.

## Patentansprüche

1. Verfahren zum Herstellen eines gefüllten Produkts, wobei die Schritte umfassen:
Bereitstellen einer vorgefertigten Hülle mit einem Hohlraum und einer Öffnung an einem Ende, wobei die Hülle aus einem ersten Material ausgebildet ist; und Vorsehen einer Füllung und eines Abdeckmaterials aus einer Düsenanordnung mit einer inneren und einer äußeren Düse, die konzentrisch sind, so dass das Abdeckmaterial durch die äußere Düse fließt und die Füllung durch die innere Düse in den Hohlraum fließt, wobei die Füllung zuerst durch die innere Düse abgegeben wird, annähernd unmittelbar gefolgt von dem Abdeckmaterial durch die äußere Düse, so dass die Füllung zuerst den Hohlraum innerhalb der vorgefertigten Hülle ausfüllen kann, gefolgt von der unmittelbaren Abgabe des Abdeckmaterials, das über das obere Ende der Füllung gelegt wird und mit Rändern der vorgefertigten Hülle eine Abdichtung bildet, wodurch die Füllung in der Hülle eingeschlossen wird und das durch die äußere Düse vorgesehene Abdeckmaterial eine Abdeckung an dem offenen Ende der Hülle bildet, um das gefüllte Produkt auszubilden.

2. Verfahren nach Anspruch 1, ferner umfassend
Bereitstellen einer vorgefertigten, essbaren Hülle mit einem Hohlraum und einer Öffnung an einem Ende, wobei die essbare Hülle aus einem essbaren Material ausgebildet ist und das Material aus der Gruppe bestehend aus Schokolade, Kandis, Karamell und Toffee ausgewählt wird; und Vorsehen einer essbaren Füllung und eines essbaren Abdeckmaterials aus einer Düsenanordnung mit einer inneren und einer äußeren Düse, die konzentrisch sind, wobei das essbare Abdeckmaterial auch aus dem essbaren Material ausgebildet ist, so dass das essbare Abdeckmaterial durch die äußere Düse fließt und die essbare Füllung durch die innere Düse in den Hohlraum fließt, wodurch die essbare Füllung in der essbaren Hülle eingeschlossen wird und das durch die äußere Düse vorgesehene, essbare Abdeckmaterial eine Abdeckung an dem offenen Ende der essbaren Hülle bildet, um das gefüllte Süßwarenprodukt auszubilden.

3. Verfahren nach Anspruch 2, ferner umfassend ein Vorerwärmen der essbaren Hülle auf eine Temperatur, um das essbare Material vor dem Vorsehen der essbaren Füllung und des essbaren Abdeckmaterials zu erweichen.

4. Verfahren nach Anspruch 2 oder 3, bei dem die essbare Füllung aus der Gruppe bestehend aus auf Wasser basierenden Füllungen und auf Fett basierenden Füllungen ausgewählt wird.

5. Verfahren nach einem der Ansprüche 2 bis 4, bei dem die essbare Hülle und das essbare Abdeckmaterial unabhängig aus der Gruppe bestehend aus Schokolade, Kandis, Karamell und Toffee ausgewählt werden.

6. Verfahren nach einem der Ansprüche 2 bis 5, bei dem die essbare Hülle durch Gießen, Stanzen oder Pressen ausgebildet wird.

7. Verfahren nach einem der Ansprüche 2 bis 6, bei dem das gefüllte Süßwarenprodukt auf eine Temperatur unterhalb annähernd 20°C gekühlt wird.

8. Verfahren nach einem der Ansprüche 2 bis 7, bei dem die essbare Hülle durch Gießen, Stanzen oder Pressen ausgebildet wird und die essbare Hülle vor dem Füllen behandelt wird, um überschüssiges Material um das offene Ende herum zu entfernen.

9. Verfahren nach Anspruch 3, bei dem die essbare Hülle und das essbare Abdeckmaterial Schokolade sind und die essbare Hülle auf annähernd 25 bis annähernd 30°C vorerwärmt wird.

10. Verfahren nach Anspruch 2, ferner umfassend
Bereitstellen einer vorgefertigten Schokoladenhülle mit einem Hohlraum und einer Öffnung an einem Ende, wobei die Schokoladenhülle aus einem Schokoladenmaterial ausgebildet ist; und Vorsehen einer Füllung und eines Schokoladenabdeckmaterials aus einer Düsenanordnung mit einer inneren und einer äußeren Düse, die konzentrisch sind, so dass das Schokoladenabdeckmaterial durch die äußere Düse fließt und die Füllung durch die innere Düse in den Hohlraum fließt, wodurch die Füllung im Wesentlichen in der Schokoladenhülle eingeschlossen wird und das durch die äußere Düse vorgesehene Schokoladenabdeckmaterial eine Abdeckung an dem offenen Ende der Schokoladenhülle bildet, um das gefüllte Schokoladensüßwarenprodukt auszubilden.

11. Verfahren nach Anspruch 10, ferner umfassend ein Vorerwärmen der Schokoladenhülle auf eine Temperatur, um das Schokoladenmaterial vor dem Vorsehen der Füllung und des Schokoladenabdeckmaterials zu erweichen.

12. Verfahren nach Anspruch 10 oder 11, bei dem die Füllung aus der Gruppe bestehend aus auf Wasser basierenden Füllungen und auf Fett basierenden Füllungen ausgewählt wird.

13. Verfahren nach einem der Ansprüche 10 bis 12, bei dem die Schokoladenhülle durch Gießen ausgebildet wird, gefolgt von einem Pressen des Schokoladenmaterials in einen Formhohlraum unter Verwendung eines Elements, um das Schokoladenmaterial geeignet über innere Ränder des Formhohlraums zu verteilen, während ein Schokoladenhohlraum ausgebildet wird, und einem anschließenden Kühlen des Schokoladenmaterials innerhalb der Form, um die Schokoladenhülle zu erhalten.

14. Verfahren nach einem der Ansprüche 10 bis 13, bei dem die Schokoladenhülle durch Gießen, Stanzen oder Pressen ausgebildet wird.

15. Verfahren nach einem der Ansprüche 10 bis 14, bei dem die Schokoladenhülle durch Gießen, Stanzen oder Pressen ausgebildet wird und die Schokoladenhülle vor dem Füllen behandelt wird, um überschüssiges Material um das offene Ende herum zu entfernen.

16. Verfahren nach Anspruch 11, bei dem die Temperatur, auf welche die Schokoladenhülle vorerwärmt wird, annähernd 25 bis annähernd 30°C beträgt.

## Revendications

1. Procédé de fabrication d'un produit fourré, comprenant les étapes consistant à :
prévoir une coque préfabriquée comportant une cavité et une ouverture sur une extrémité, la coque étant formée à partir d'une première matière ; et appliquer un fourrage et une matière de couverture depuis un agencement de buses comprenant des buses interne et externe concentriques, de manière que la matière de couverture s'écoule par la buse externe et le fourrage s'écoule par la buse interne jusque dans la cavité, le fourrage étant distribué tout d'abord par la buse interne puis, juste après ou presque, la matière de couverture étant distribuée par la buse externe, de manière que le fourrage puisse remplir la cavité tout d'abord au sein de la coque préfabriquée, et être suivi de la distribution immédiate de la matière de couverture qui est étalée sur le sommet du fourrage et forme une soudure avec les bords de la coque préfabriquée, grâce à quoi le fourrage est enfermé dans la coque et la matière de couverture appliquée via la buse externe forme une couverture sur l'extrémité ouverte de la coque pour former le produit fourré.

2. Procédé selon la revendication 1, comprenant, en outre, les opérations consistant à :
prévoir une coque préfabriquée comestible comportant une cavité et une ouverture sur une extrémité, la coque comestible étant formée à partir d'une matière comestible, la matière comestible étant sélectionnée dans le groupe consistant en chocolat, bonbon, caramel mou et dur ; et appliquer un fourrage comestible et une matière de couverture comestible depuis un agencement de buses comprenant des buses interne et externe concentriques, la matière de couverture comestible étant également formée à partir de la matière comestible, de manière que la matière de couverture comestible s'écoule par la buse externe et le fourrage comestible s'écoule par la buse interne jusque dans la cavité, le fourrage comestible étant enfermé dans la coque comestible et la matière de couverture comestible appliquée via la buse externe formant une couverture sur l'extrémité ouverte de la coque comestible pour former le produit de confiserie fourré.

3. Procédé selon la revendication 2, comprenant, en outre, le préchauffage de la coque comestible jusqu'à une température pour ramollir la matière comestible avant d'appliquer le fourrage comestible et la matière de couverture comestible.

4. Procédé selon la revendication 2 ou 3, dans lequel le fourrage comestible est sélectionné dans le groupe consistant en fourrages à base d'eau et en fourrages à base de matières grasses.

5. Procédé selon l'une quelconque des revendications 2 à 4, dans lequel la coque comestible et la matière de couverture comestible sont sélectionnées indépendamment dans le groupe consistant en chocolat, bonbon, caramel mou et dur.

6. Procédé selon l'une quelconque des revendications 2 à 5, dans lequel la coque comestible est formée par moulage, estampage ou pressage.

7. Procédé selon l'une quelconque des revendications 2 à 6, dans lequel le produit de confiserie fourré est refroidi jusqu'à une température inférieure à 20°C environ.

8. Procédé selon l'une quelconque des revendications 2 à 7, dans lequel la coque comestible est formée par moulage, estampage ou pressage et la coque comestible est traitée avant fourrage pour éliminer tout excès de matière autour de l'extrémité ouverte.

9. Procédé selon la revendication 3, dans lequel la coque comestible et la matière de couverture comestible sont du chocolat et la coque comestible est préchauffée à une température comprise entre environ 25°C et 30°C.

10. Procédé selon la revendication 2, comprenant, en outre, les opérations consistant à :
prévoir une coque préfabriquée en chocolat comportant une cavité et une ouverture sur une extrémité, la coque en chocolat étant formée à partir d'une matière de chocolat ; et appliquer un fourrage et une matière de couverture en chocolat depuis un agencement de buses comprenant des buses interne et externe concentriques, de manière que la matière de couverture en chocolat s'écoule par la buse externe et le fourrage s'écoule par la buse interne jusque dans la cavité, le fourrage étant sensiblement enfermé dans la coque en chocolat et la matière de couverture en chocolat appliquée via la buse externe formant une couverture sur l'extrémité ouverte de la coque en chocolat pour former le produit de confiserie fourré en chocolat.

11. Procédé selon la revendication 10, comprenant, en outre, le préchauffage de la coque en chocolat jusqu'à une température pour ramollir la matière en chocolat avant d'appliquer le fourrage et la matière de couverture en chocolat.

12. Procédé selon la revendication 10 ou 11, dans lequel le fourrage est sélectionné dans le groupe consistant en fourrages à base d'eau et en fourrages à base de matières grasses.

13. Procédé selon l'une quelconque des revendications 10 à 12, dans lequel la coque en chocolat est formée par moulage, suivi du pressage de la matière en chocolat dans une cavité de moule en utilisant un élément pour disperser de manière adéquate la matière en chocolat sur les bords internes de la cavité de moule tout en créant une cavité en chocolat, puis la matière en chocolat est refroidie au sein du moule, pour obtenir la coque en chocolat.

14. Procédé selon l'une quelconque des revendications 10 à 13, dans lequel la coque en chocolat est formée par moulage, estampage ou pressage.

15. Procédé selon l'une quelconque des revendications 10 à 14, dans lequel la coque en chocolat est formée par moulage, estampage ou pressage et la coque en chocolat est traitée avant remplissage pour éliminer tout excès de matière autour de l'extrémité ouverte.

16. Procédé selon la revendication 11, dans lequel la température à laquelle la coque en chocolat est préchauffée est comprise entre environ 25°C et 30°C.
